# EUROPEAN PATENT SPECIFICATION

(11) **EP 3 252 934 B1**
(45) Date of publication and mention of the grant of the patent: **05.07.2023**
(21) Application number: 16171965.3
(22) Date of filing: 30.05.2016
(51) Int. Cl.: H02K 11/00, H02K 11/33, F04D 29/58, F04D 13/06

(54) **ELECTRIC PUMP WITH WASTE HEAT RECOVERY SYSTEM**
ELEKTRISCHE PUMPE MIT ABWÄRMERÜCKGEWINNUNGSSYSTEM
POMPE ÉLECTRIQUE AVEC SYSTÈME DE RÉCUPÉRATION DE CHALEUR PERDUE

(43) Date of publication of application: 06.12.2017
(73) Proprietor: Xylem Europe GmbH, 8200 Schaffhausen (CH)
(72) Inventor: Lorenzi, Davide, 36050 Sovizzo (Vicenza) (IT); Reffo, Fabio, 36077 Altavilla Vicentina (Vicenza) (IT)
(74) Representative: Lenzing Gerber Stute

(56) References cited:
- EP-A1- 1 480 327
- WO-A1-2014/206515
- CN-U- 204 856 352
- JP-A- H11 299 289
- JP-A- 2005 323 455
- JP-A- 2008 061 375
- JP-A- 2008 277 654

## Description

The present invention relates to an electric pump having the features of the preamble of claim 1.

Many electric pumps presently being produced and installed in the industry are equipped with an electronic control module which controls the electrical load in the system. Such a device, commonly called an inverter, drives supply power of controlled frequency and voltage to the motor. The combination of motor and inverter ensures high energy efficiency while managing systems capacity and pressure variables, hence reducing the total energy consumption of the pump.

To further increase efficiency, technically dissipated energy can be recovered by means of transducers, which convert the dissipated energy into electricity and reinsert it into the system thanks to the inverter.

EP 1 480 327 A1 discloses an electric motor equipped with an electronic control and at least one Seebeck element whose one side is connected to the motor in a heat-conducting manner and whose other side is in heat-conducting connection with a cooling medium. The electrical output power of the Seebeck element is led to the electronic control of the motor. A disadvantage of this system is that it is difficult to integrate the Seebeck element into the motor design. Further, it is necessary to guide cables out of the motor housing, which results in higher cost and potential sealing problems.

It is object of the present invention to provide an electric pump with energy recovery and thus improved efficiency whereby a simple and cost-efficient design is remained.

This object is achieved by an electric pump having the features of claim 1.

Accordingly, an electric pump comprising a pump member, an electric motor positioned in a motor housing, including a stator, in which a rotor is rotatably mounted, said rotor comprising a rotor shaft driving the pump member, a motor controller with an inverter positioned within a controller housing and a heat sink, wherein the heat sink is a passive heat exchanger, is provided, wherein the electric pump further compromises a thermoelectric generator with one side thermally coupled to the inverter and with another side thermally coupled to the heat sink to generate electric current from a temperature differential between the inverter and the heat sink. The thermoelectric generator is placed in a recess in the heat sink forming a flush surface and the heat sink constitutes a wall of the controller housing. This design is very simple and cost-efficient. The dissipated heat from the inverter can be converted by the TEG (Thermo Electric Generator) into electric energy and reused.

Preferably, the pump member is or comprises at least one impeller, which takes in a liquid fluid through an intake duct and feeds it towards a discharge duct. In general the pump member may comprise multiple impellers as for instance in a multistage pump.

In one embodiment the electric current from the thermoelectric generator is used to operate the inverter. Whereas it is preferred, that the electric current is fed into the low voltage circuit of the inverter.

A provision can be made for the thermoelectric generator to be connected to the DC/DC converter.

It may be provided, that the electric pump further comprises a fan used for cooling the heat sink. In another embodiment the fan is operated by the electrical output of the thermoelectric generator.

The thermoelectric generator comprises at least one TEG cell and preferably more than one TEG cell.

The pump may be a multistage or single stage pump, in particular a centrifugal pump. An exemplary embodiment of the present invention is described below with aid of the drawings. In all figures the same reference signs denote the same components or functionally similar components.

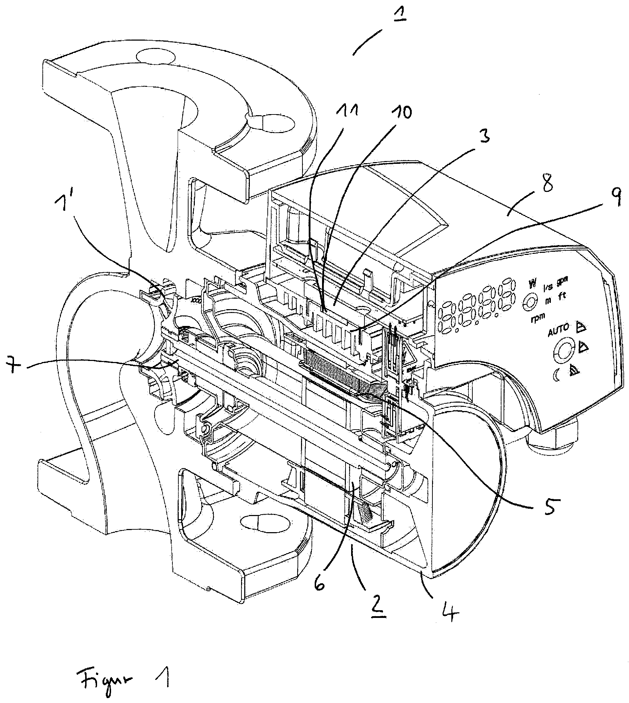

Figure 1 shows a cut through a three-dimensional view of an electric pump with a thermo electric generator in accordance with an embodiment of the present invention.

The electric pump 1 shown in figure 1 is driven by a permanent magnets synchronous motor 2 controlled by an inverter 3.

The shown pump 1 is a wet-rotor circulator. Wet-rotor circulators are typically used for HVAC applications (e.g. heating and cooling systems, domestic hot water systems, closed loop hot/cold water circulation and/or solar and geothermal systems). However, the present invention shall not be limited to this specific type of pump.

The electric pump 1 comprises an electric motor 2 with a motor housing 4 which receives a stator 5, in which a rotor 6 is rotatably mounted, said rotor 6 comprising a shaft 7, on whose pump-side end an impeller 1' of a centrifugal pump driven by the electric motor 2 is arranged. The rotor 6 of the electric motor 2 runs in a fluid which is separated by a can from the stator 5 having the electric connections and components. The pump impeller 1' takes in a liquid fluid through an intake duct and feeds it towards a discharge duct. The electric pump 1 further comprises a controller housing 8 and the inverter 3 placed therein.

The inverter 3 comprises an electric power static converter divided into two main sections: the input section and the output section. The input section consists of a diode rectifier connected to the power mains that converts electric power from AC to DC. The output section consists of an insulated-gate bipolar transistor (IGBT) that converts electric power from DC to AC while controlling the frequency and amplitude of the generated AC voltage.

The semi-conductor devices that are part of the inverter 3 are installed on a heat sink 9 that removes the heat dissipated during operation. A heat sink 9 is a passive heat exchanger that transfers the generated heat into a coolant fluid in motion. The heat sink 9 covers the controller and is part of the controller housing 8 and constitutes a wall of the housing respectively.

As can be seen in figure 1, a TEG (Thermo Electric Generator) cell 10 is arranged between the inverter 3 and the heat sink 9. TEG cells are well-known. They convert thermal energy into electric energy using the Seebeck effect.

The TEG 10 is placed in a recess 11 of the heat sink 9 so that the upper side of the TEG forms a flush surface with the heat sink 9. The upper side of the TEG is directly attached to the inverter 3 and the lower side is in contact with the heat sink 9. The recess 11 is shaped so that a gap between the heat sink 9 and the TEG 10 is circumferentially formed, improving the efficiency of the TEG by channeling the temperature difference across the Seebeck element.

The output energy of the Seebeck element is passed to the low voltage circuit of the inverter itself, thus increasing the overall efficiency of the system.

However, the Seebeck element cannot ensure a constant output current. The current needs to be converted in a DC-DC converter which transforms a continuous voltage input in a non-regulated DC voltage output adjusted to the desired level in the inverter.

If the output of the thermoelectric generator is as low as tens of mV, none of the available DC-DC converters can be used. The current then first passes through a transformer (AC voltage) with a high transformation ratio to elevate the voltage amplitude and subsequently rectifying the voltage with values of the order of volts to properly feed a generic inverter circuit.

In one embodiment of the present invention a powered fan is used to cool the electric motor and the heat sink. In this case it is preferred to use a low voltage electric motor driven fan powered by means of the energy obtained from the Seebeck element. This results in energy savings and additionally in an advantage for the components of the supply circuit of the auxiliary services of the inverter, which are relieved of its load and thus can be dimensioned for lower currents.

Preferably, the base of the inverter is an aluminum radiator, which allows to dissipate the heat generated by the electronic components, and in particular from the power module which is loaded with the entire current absorbed by the motor.

The inventive electric pump with a TEG placed between an inverter and a heat sink allows reusing part of the dissipated heat increasing the efficiency of the pump. Further, some components of the system could be reduced due to energy recovery which leads to cost reduction, e.g. the heat sink, because the dissipated heat is reduced. Due to the implementation of the TEG in the heat sink, which is part of the controller housing, a simple and cost-efficient design is remained.

## Claims

1. An electric pump (1) comprising:
a pump member,
an electric motor (2) positioned in a motor housing (4), including a stator (5), in which a rotor (6) is rotatably mounted, said rotor (6) comprising a rotor shaft (7) driving the pump member (1'),
a motor controller with an inverter (3) positioned within a controller housing (8) and a heat sink (9), wherein the heat sink (9) is a passive heat exchanger,
a thermoelectric generator (10) with one side thermally coupled to the inverter (3) and with another side thermally coupled to the heat sink (9) to generate electric current from a temperature differential between the inverter (3) and the heat sink (9), **characterized in that** the upper side of the thermoelectric generator (10) is directly attached to the inverter (3) and the lower side is in contact with the heat sink (9), wherein the thermoelectric generator (10) is placed in a recess (11) in the heat sink (9) forming a flush surface with the heat sink (9) and the heat sink (9) constitutes a wall of the controller housing (8).

2. Electric pump according to claim 1, **characterized in that** the pump member comprises at least one impeller, which takes in a liquid fluid through an intake duct and feeds it towards a discharge duct.

3. Electric pump according to claim 1 or claim 2, **characterized in that** the electric current from the thermoelectric generator (10) is used to operate the inverter (3).

4. Electric pump according to one of the proceeding claims, **characterized in that** the electric current from the thermoelectric generator (10) is fed into the low voltage circuit of the inverter (3).

5. Electric pump according to one of the proceeding claims, **characterized in that** a DC/DC converter is connected to the thermoelectric generator (10).

6. Electric pump according to one of the proceeding claims, **characterized in that** the electric pump (1) further comprises a fan used for cooling the heat sink.

7. Electric pump according to claim 6, **characterized in that** the fan is operated by the electrical output of the thermoelectric generator (10).

8. Electric pump according to one of the proceeding claims, **characterized in that** the thermoelectric generator (10) comprises at least one cell.

9. Electric pump according to one of the proceeding claims, **characterized in that** the electric pump (1) is wet-rotor circulator.

## Patentansprüche

1. Eine elektrische Pumpe (1) mit:
einem Pumpenelement,
einem in einem Motorgehäuse (4) angeordneten Elektromotor (2) mit einem Stator (5), in dem ein Rotor (6) drehbar gelagert ist, wobei der Rotor (6) eine Rotorwelle (7) aufweist, die das Pumpenelement (1') antreibt,
einer Motorsteuerung mit einem in einem Steuerungsgehäuse (8) angeordneten Wechselrichter (3) und einem Kühlkörper (9), wobei der Kühlkörper (9) ein passiver Wärmetauscher ist,
einem thermoelektrischen Generator (10), dessen eine Seite thermisch mit dem Wechselrichter (3) und dessen andere Seite thermisch mit dem Kühlkörper (9) gekoppelt ist, um aus einer Temperaturdifferenz zwischen dem Wechselrichter (3) und dem Kühlkörper (9) elektrischen Strom zu erzeugen, **dadurch gekennzeichnet, dass** die obere Seite des thermoelektrischen Generators (10) direkt an dem Wechselrichter (3) angebracht ist und die untere Seite in Kontakt mit dem Kühlkörper (9) steht, wobei der thermoelektrische Generator (10) in einer Aussparung (11) in dem Kühlkörper (9) angeordnet ist und eine bündige Oberfläche mit dem Kühlkörper (9) bildet, und der Kühlkörper (9) eine Wand des Steuerungsgehäuses (8) bildet.

2. Elektrische Pumpe nach Anspruch 1, **dadurch gekennzeichnet, dass** das Pumpenelement mindestens ein Laufrad umfasst, das ein flüssiges Fluid durch einen Ansaugkanal ansaugt und zu einem Auslasskanal fördert.

3. Elektrische Pumpe nach Anspruch 1 oder Anspruch 2, **dadurch gekennzeichnet, dass** der elektrische Strom aus dem thermoelektrischen Generator (10) zum Betrieb des Wechselrichters (3) verwendet wird.

4. Elektrische Pumpe nach einem der vorhergehenden Ansprüche, **dadurch gekennzeichnet, dass** der elektrische Strom aus dem thermoelektrischen Generator (10) in den Niederspannungskreis des Wechselrichters (3) eingespeist wird.

5. Elektrische Pumpe nach einem der vorhergehenden Ansprüche, **dadurch gekennzeichnet, dass** an den thermoelektrischen Generator (10) ein DC/DC-Wandler angeschlossen ist.

6. Elektrische Pumpe nach einem der vorhergehenden Ansprüche, **dadurch gekennzeichnet, dass** die elektrische Pumpe (1) ferner einen Lüfter umfasst, der zur Kühlung des Kühlkörpers dient.

7. Elektrische Pumpe nach Anspruch 6, **dadurch gekennzeichnet, dass** das Gebläse durch die elektrische Leistung des thermoelektrischen Generators (10) betrieben wird.

8. Elektrische Pumpe nach einem der vorhergehenden Ansprüche, **dadurch gekennzeichnet, dass** der thermoelektrische Generator (10) mindestens eine Zelle umfasst.

9. Elektrische Pumpe nach einem der vorhergehenden Ansprüche, **dadurch gekennzeichnet, dass** die elektrische Pumpe (1) eine Nassläufer-Umwälzpumpe ist.

## Revendications

1. Pompe électrique (1) comprenant :
un élément de pompe ;
un moteur électrique (2) qui est positionné à l'intérieur d'un carter de moteur (4), incluant un stator (5), à l'intérieur duquel un rotor (6) est monté à rotation, ledit rotor (6) comprenant un arbre de rotor (7) qui entraîne l'élément de pompe (1') ;
un contrôleur de moteur comportant un inverseur (3) qui est positionné à l'intérieur d'un boîtier de contrôleur (8) et un dissipateur de chaleur (9), dans lequel le dissipateur de chaleur (9) est un échangeur de chaleur passif ;
un générateur thermoélectrique (10) dont un côté est couplé thermiquement à l'inverseur (3) et dont un autre côté est couplé thermiquement au dissipateur de chaleur (9) pour générer du courant électrique à partir d'une différence de température entre l'inverseur (3) et le dissipateur de chaleur (9), **caractérisée en ce que** le côté supérieur du générateur thermoélectrique (10) est directement lié à l'inverseur (3) et son côté inférieur est en contact avec le dissipateur de chaleur (9), dans laquelle le générateur thermoélectrique (10) est placé à l'intérieur d'un évidement (11) dans le dissipateur de chaleur (9) en formant une surface affleurante avec le dissipateur de chaleur (9), et le dissipateur de chaleur (9) constitue une paroi du boîtier de contrôleur (8).

2. Pompe électrique selon la revendication 1, **caractérisée en ce que** l'élément de pompe comprend au moins une roue, laquelle reçoit un fluide liquide au travers d'un conduit d'admission et l'alimente en direction d'un conduit de décharge.

3. Pompe électrique selon la revendication 1 ou la revendication 2, **caractérisée en ce que** le courant électrique en provenance du générateur thermoélectrique (10) est utilisé pour faire fonctionner l'inverseur (3).

4. Pompe électrique selon l'une quelconque des revendications précédentes, **caractérisée en ce que** le courant électrique en provenance du générateur thermoélectrique (10) est alimenté à l'intérieur du circuit basse tension de l'inverseur (3).

5. Pompe électrique selon l'une quelconque des revendications précédentes, **caractérisée en ce qu'**un convertisseur courant continu/courant continu, DC/DC, est connecté au générateur thermoélectrique (10).

6. Pompe électrique selon l'une quelconque des revendications précédentes, **caractérisée en ce que** la pompe électrique (1) comprend en outre un ventilateur qui est utilisé pour refroidir le dissipateur de chaleur.

7. Pompe électrique selon la revendication 6, **caractérisée en ce que** le ventilateur est actionné par la sortie électrique du générateur thermoélectrique (10).

8. Pompe électrique selon l'une quelconque des revendications précédentes, **caractérisée en ce que** le générateur thermoélectrique (10) comprend au moins une cellule.

9. Pompe électrique selon l'une quelconque des revendications précédentes, **caractérisée en ce que** la pompe électrique (1) est un circulateur à rotor noyé.
